# EUROPEAN PATENT APPLICATION

(11) **EP 4 811 760 A1**
(43) Date of publication of application: **23.09.2026**
(21) Application number: 25164882.0
(22) Date of filing: 19.03.2025
(51) Int. Cl.: H04N 1/00, G06F 3/12, H04N 1/32, H04N 1/327, G06F 16/93, H04N 1/21

(54) **IMAGE FORMING DEVICE AND DOCUMENT MANAGEMENT SYSTEM FOR PROVIDING DOCUMENT STORAGE LOCATION BASED ON IDENTIFICATION INFORMATION**

(71) Applicant: Toshiba TEC Kabushiki Kaisha, Tokyo 141-8562 (JP)
(72) Inventor: Aoyama, Ryuichi, Tokyo, 141-8562 (JP)
(74) Representative: Bandpay & Greuter

(57) **Abstract**

An image forming device and a document management system enable a user to give an instruction to execute processing such as printing of a document are provided. An image forming device includes a display device, a communication interface, and a processor. The display device displays an image. The communication interface communicates via a network to which an external device including a management server connects. The processor causes the display device to display an image showing identification information generated, inquires about storage place information of a document linked to the identification information, from the management server, and downloads a document stored in a storage place indicated by the storage place information in response to acquiring the storage place information of the document linked to the identification information.

## Description

### FIELD

Embodiments described herein relate generally to an image forming device and a document management system.

### BACKGROUND

According to the related art, if a user wants to print a document generated using a user terminal, the user terminal transmits the document to be printed to an image forming device via a dedicated driver program. Also, the user may operate the user terminal to generate the document to be printed via a web service. In the related-art system, the document generated via the web service needs to be temporarily downloaded to the user terminal in order to print the document with the image forming device. There is also a problem in that the image forming device needs to be provided with a device for acquiring the document or information to acquire the document from the user terminal.

### DISCLOSURE OF THE INVENTION

To this end, an image forming device and a document management system according to the appended claims are provided.

### DESCRIPTION OF THE DRAWINGS

FIG. 1 shows an example of the configuration of a document management system according to an embodiment.
FIG. 2 is a block diagram showing an example of the configuration of a digital multi-functional peripheral as an image forming device.
FIG. 3 is a block diagram showing an example of the configuration of a management server.
FIG. 4 is a block diagram showing an example of the configuration of a user terminal.
FIG. 5 shows an example of the configuration of a database held in the management server.
FIG. 6 is a flowchart for explaining an example of operation of the digital multi-functional peripheral.
FIG. 7 shows an example of display of a guide screen displayed on a display device of the digital multi-functional peripheral.
FIG. 8 shows an example of display of the guide screen.
FIG. 9 shows an example of display of the guide screen.
FIG. 10 is a flowchart for explaining an example of operation of the user terminal.
FIG. 11 shows an example of display of a guide screen displayed on a display device of the user terminal.
FIG. 12 shows an example of display of the guide screen.
FIG. 13 shows an example of the guide screen.
FIG. 14 is a flowchart for explaining an example of operation of the management server.

### DETAILED DESCRIPTION

An embodiment described herein is to provide an image forming device and a document management system with high convenience for the user to give an instruction to execute processing such as printing of a document.

In general, according to one embodiment, an image forming device comprises a display device, a communication interface, and a processor. The display device displays an image. The communication interface communicates via a network to which an external device including a management server connects. The processor causes the display device to display an image showing identification information generated, inquires about storage place information of a document linked to the identification information, from the management server, and downloads a document stored in a storage place indicated by the storage place information if the storage place information of the document linked to the identification information is acquired.

An embodiment will now be described with reference to the drawings. First, the configuration of a document management system 1 according to an embodiment will be described.

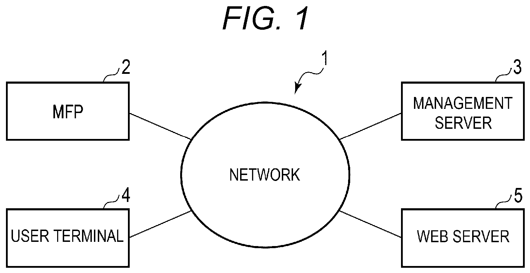

FIG. 1 shows an example of the configuration of the document management system 1 according to the embodiment.
The document management system 1 includes a digital multi-functional peripheral (MFP) 2 as an image forming device (image processing device), a management server 3, a user terminal 4, and a web server 5.

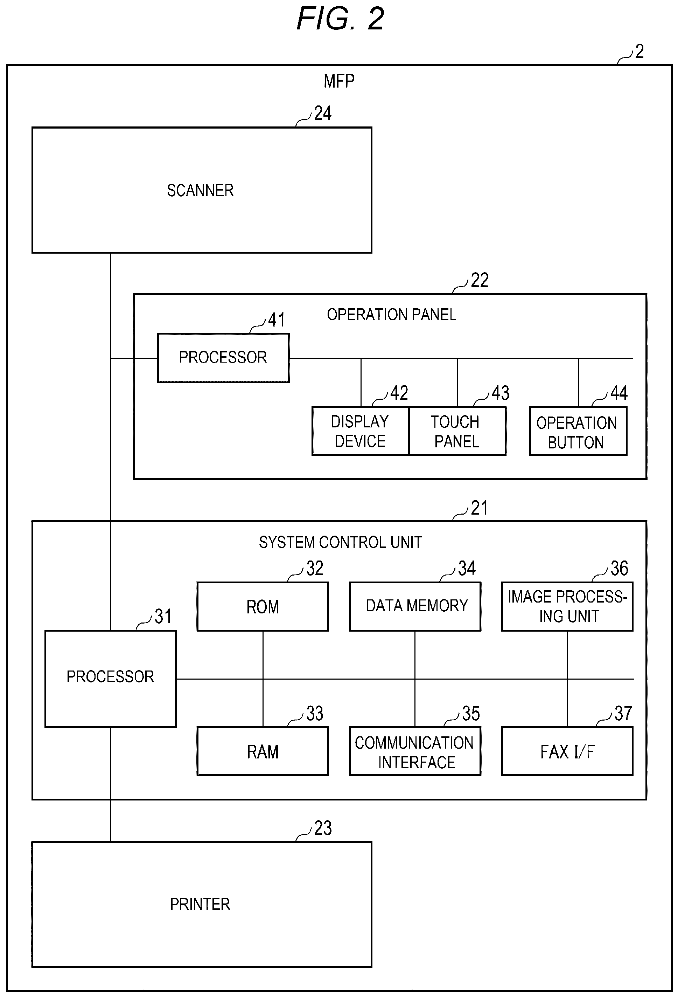

The digital multi-functional peripheral 2 has a system control unit (e.g., system controller) 21 including a communication function, an operation panel 22, a printer 23, and a scanner 24 or the like (see FIG. 2). The operation panel 22 provided in the digital multi-functional peripheral 2 has a display device 42 (see FIG. 2) that can display information such as a two-dimensional code (two-dimensional barcode).

The digital multi-functional peripheral 2 is assumed to be a device used by a general user. The digital multi-functional peripheral 2 is installed in a work area, a store, or a public facility or the like. A plurality of digital multi-functional peripherals 2 may be installed and used. In this embodiment, it is assumed that the digital multi-functional peripheral 2 is used by any user operating the user terminal 4. The digital multi-functional peripheral 2 may also be used in such a way as to execute processing such as printing in response to the payment of a fee by the user.

The management server 3 is a device that manages information about a document or the like in the document management system 1. The management server 3 is communicably connected to the digital multi-functional peripheral 2 and the user terminal 4 via a network. The management server 3 registers information such as information about a document in response to a registration request from the user terminal 4. The management server 3 provides the registered information in response to an inquiry from the digital multi-functional peripheral 2.

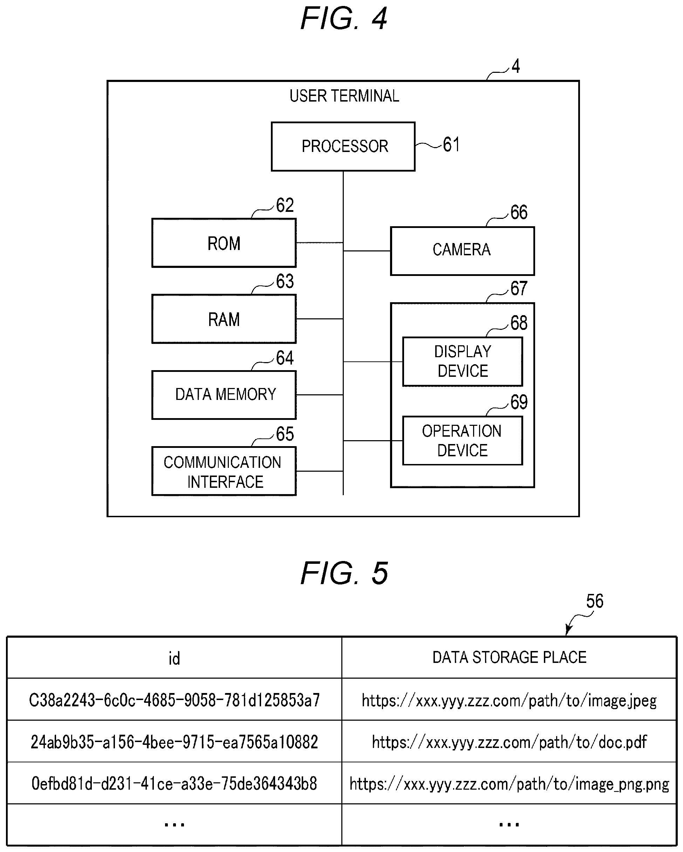

The user terminal 4 is a terminal device operated by the user using the document management system 1. The user terminal 4 is a portable information processing device having a communication interface and a camera 66 (see FIG. 4) or the like. For example, the user terminal 4 is a smartphone or tablet PC with a camera. In this embodiment, it is assumed that an application program (hereinafter referred to as an application) to execute various processing is installed in the user terminal 4.

The web server 5 is a server device that provides a web service on the network. The web server 5 accepts an access to a web page or the like from the user terminal 4 and provides a service in response to a user operation with the user terminal 4. In this embodiment, it is assumed that the web server 5 provides a service to generate a document in response to a user operation with the user terminal 4. In this embodiment, the document is not limited to text data and may be electronic data to be a target of processing such as printing by the digital multi-functional peripheral 2. For example, the document may be image data or the like.

The configuration of the digital multi-functional peripheral 2 as an image forming device in the document management system 1 according to the embodiment will now be described.
FIG. 2 is a block diagram showing an example of the configuration of the digital multi-functional peripheral 2 as the image forming device according to the embodiment.
As shown in FIG. 2, the digital multi-functional peripheral 2 has the system control unit 21, the operation panel 22, the printer 23, and the scanner 24.

The system control unit 21 controls the entirety of the digital multi-functional peripheral 2. The system control unit 21 includes a processor (first processor) 31, a read-only memory (ROM) 32, a random-access memory (RAM) 33, a data memory 34, a communication interface (I/F) 35, an image processing unit (e.g., an image processor) 36, and a facsimile interface (I/F) 37.

The processor 31 executes a program and thus implements various processing functions. The processor 31 is, for example, a CPU. The processor 31 connects to a processor 41 of the operation panel 22, the printer 23, and the scanner 24 or the like via an internal interface.

The ROM 32 functions as a program memory that saves a program. The ROM 32 is a non-rewritable nonvolatile memory. The RAM 33 functions as a working memory or a buffer memory. The processor 31 executes a program stored in the ROM 32 or the data memory 34, using the RAM 33, and thus executes various processing.

The data memory 34 is a rewritable nonvolatile memory. For example, the data memory 34 is configured with a memory device such as a hard disk drive (HDD) or a solid-state drive (SSD). The data memory 34 stores various data such as control data an application program (hereinafter also referred to as an application), setting information, and image data.

The communication interface (first communication interface) 35 is an interface to perform data communication with an external device. The communication interface 35 is a network interface to communicate with a device such as the management server 3 or the web server 5 via the network.

The image processing unit 36 performs image processing. For example, the image processing unit 36 converts an acquired document to data for printing to be printed on a paper by the printer 23. The image processing unit 36 may perform image processing to correct image data as an acquired document, in response to a user instruction or a predetermined setting.

The facsimile interface 37 is an interface to perform facsimile communication. The facsimile interface 37 transmits an acquired document as facsimile data to a designated destination. The facsimile interface 37 is configured to perform facsimile transmission as processing of the acquired document.

The operation panel 22 is a user interface. The operation panel 22 includes the processor 41, the display device 42, a touch panel (operation device) 43, and an operation button (operation device) 44. The display device 42 is a display that displays an operation guidance or the like. The touch panel 43 is provided on a display screen of the display device 42. The touch panel 43 detects a part touched by the user, on the display screen of the display device 42. The operation button 44 is a button to input a predetermined instruction.

The processor 41 of the operation panel 22 controls the operation panel 22. The processor 41 executes a program stored in an internal memory or an external memory and thus implements various processing. The processor 41 is connected to the processor 31 of the system control unit 21 and controls the operation panel 22 in response to an instruction from the processor 31 of the system control unit 21. For example, the processor 41 controls the display content displayed on the display device 42 in response to an instruction from the processor 31 of the system control unit 21. The processor 41 also detects an input on the touch panel 43 and the operation button 44 and supplies information representing the input content to the processor 31 of the system control unit 21.

The printer 23 forms an image on a medium (image forming target medium) such as a paper. The printer 23 prints, for example, an image for printing supplied from the system control unit 21, on a paper picked up from a paper feed cassette. The printer 23 may be configured to form an image by any image forming method. For example, if the printer 23 forms an image by an electrophotographic method, the printer 23 has an image forming unit (e.g., image former) that forms a developer image on an image carrier such as a photoconductive drum and transfers the developer image on the image carrier. If the printer 23 forms an image by an inkjet method, the printer 23 has an image forming unit that forms an image on a paper with an ink ejected from an inkjet head.

The scanner 24 is a device that reads an image on a document. The scanner 24 is installed, for example, at an upper part of the main body of the digital multi-functional peripheral 2. The scanner 24 optically reads an image on a document set on a document table glass or a document set in an automatic document feeder (ADF). The scanner 24 outputs image data of the document as the result of reading the image on the document.

The configuration of the management server 3 in the document management system 1 according to the embodiment will now be described.

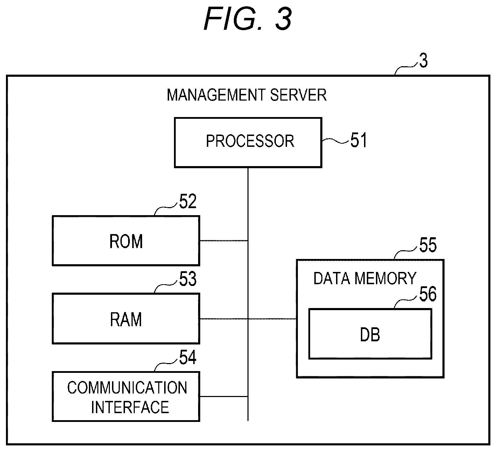

FIG. 3 is a block diagram showing an example of the configuration of the management server 3 in the document management system 1 according to the embodiment.
As shown in FIG. 3, the management server 3 has a processor (second processor) 51, a read-only memory (ROM) 52, a random-access memory (RAM) 53, a communication interface (I/F) 54, and a data memory 55 or the like.

The processor 51 executes a program to execute various processing. The processor 51 is, for example, a CPU. The processor 51 is connected to each part in the management server 3 via an internal interface. The processor 51 executes a program stored in the ROM 52 or the data memory 55, using the RAM 53, and thus executes various processing. For example, the processor 51 executes processing, described later, based on an application program installed in the data memory 55.

The ROM 52 is a non-rewritable nonvolatile memory. The ROM 52 stores a preset program and control data or the like. The RAM 53 functions as a working memory or a buffer memory.

The communication interface (second communication interface) 54 is an interface to communicate with an external device via the network. In this embodiment, the communication interface 54 is a network interface to communicate with the user terminal 4 and the digital multi-functional peripheral 2 via the network.

The data memory 55 is a rewritable nonvolatile memory. The data memory 55 stores a program, control data, and various data such as setting information. In the example of the configuration shown in FIG. 3, the data memory 55 stores a database (DB) 56. The database 56 stores an identifier (id) and data corresponding to the id (storage place information indicating the storage place of the document), establishing a correspondence between the id and the data, in response to a registration request from the user terminal 4.

The configuration of the user terminal 4 in the document management system 1 according to the embodiment will now be described.
FIG. 4 is a block diagram showing an example of the configuration of the user terminal 4 in the document management system 1 according to the embodiment.
As shown in FIG. 4, the user terminal 4 has a processor 61, a read-only memory (ROM) 62, a random-access memory (RAM) 63, a data memory 64, a communication interface (I/F) 65, the camera 66, and a user interface 67 or the like.

The processor 61 executes a program to execute various processing. The processor 61 is, for example, a CPU. The processor 61 is connected to each part in the user terminal 4 via an internal interface. The processor 61 executes a program stored in the ROM 62 or the data memory 64, using the RAM 63, and thus executes various processing.

The ROM 62 is a non-rewritable nonvolatile memory. The ROM 62 stores a preset program and control data or the like. The RAM 63 functions as a working memory or a buffer memory. The data memory 64 is a rewritable nonvolatile memory. The data memory 64 stores a program, control data, and various data such as setting information.

The communication interface 65 is an interface to communicate with an external device via the network. For example, the communication interface 65 is a network interface to communicate with the management server 3 via the network.

The camera 66 picks up an image. The camera 66 outputs the picked-up image to the processor 61. The processor 61 has a function of processing the image picked up by the camera 66. For example, the processor 61 extracts a code image (for example, a two-dimensional code) from the image picked up by the camera 66 and recognizes information represented by the extracted code image.

The user interface 67 has a display device 68 and an operation device 69. For example, the user interface 67 is configured with a display with a touch panel. The display device 68 is a display that displays an operation guidance or the like. For example, the display device 68 is configured with a liquid crystal display device or an organic EL or the like. The operation device 69 accepts an operation by the user. For example, the operation device 69 is configured with a touch panel provided on a display screen surface of the display device 68. The operation device 69 may also include a hard key.

The information registered in the database 56 provided in the data memory 55 of the management server 3 in the document management system 1 according to the embodiment will now be described.
FIG. 5 shows an example of the information registered in the database 56 provided in the data memory 55 of the management server 3 in the document management system 1 according to the embodiment.
The management server 3 registers the information (storage place information) indicating the storage place of a document corresponding to an id, in the database 56, in response to a registration request from the user terminal 4. The id and the storage place information of the document corresponding to the id are designated by the registration request from the user terminal 4.

The id is any identification information generated by the digital multi-functional peripheral 2. The id is identification information displayed as a two-dimensional barcode (code image) on the display device 42 of the operation panel 22 of the digital multi-functional peripheral 2. The two-dimensional barcode representing the id can be recognized by the user terminal 4 from the image picked up by the camera 66. The user terminal 4 acquires the id from the two-dimensional barcode displayed on the display device 42 of the digital multi-functional peripheral 2, using the camera 66.

However, the identification information is not limited to the two-dimensional barcode representing the id that is displayed on the display device 42 of the digital multi-functional peripheral 2. The identification information as the id displayed on the display device 42 of the digital multi-functional peripheral 2 may be any information (image) that can be recognized by the user terminal 4 from the image picked up by the camera 66.
Also, the storage place information corresponding to the id is information indicating the storage place of the document inputted by the user who is the operator of the user terminal 4. The storage place information is, for example, a uniform resource locator (URL) on the network. The storage place information may be any information indicating the storage place of the document that can be accessed by the digital multi-functional peripheral 2.

For example, the user accesses the web server 5, using the user terminal 4, and generates a document on the web server 5. In this case, the web server 5 provides a service to generate a document in response to an instruction from the user terminal 4, via a web application or the like. The web server 5 stores the document generated in response to the instruction from the user terminal 4, in a specified storage place, and presents storage place information such as a URL indicating the storage place to the user terminal 4. Thus, the user terminal 4 can acquire the storage place information of the document generated on the web server 5.

Operations of the digital multi-functional peripheral 2 as the image forming device in the document management system 1 according to the embodiment will now be described.

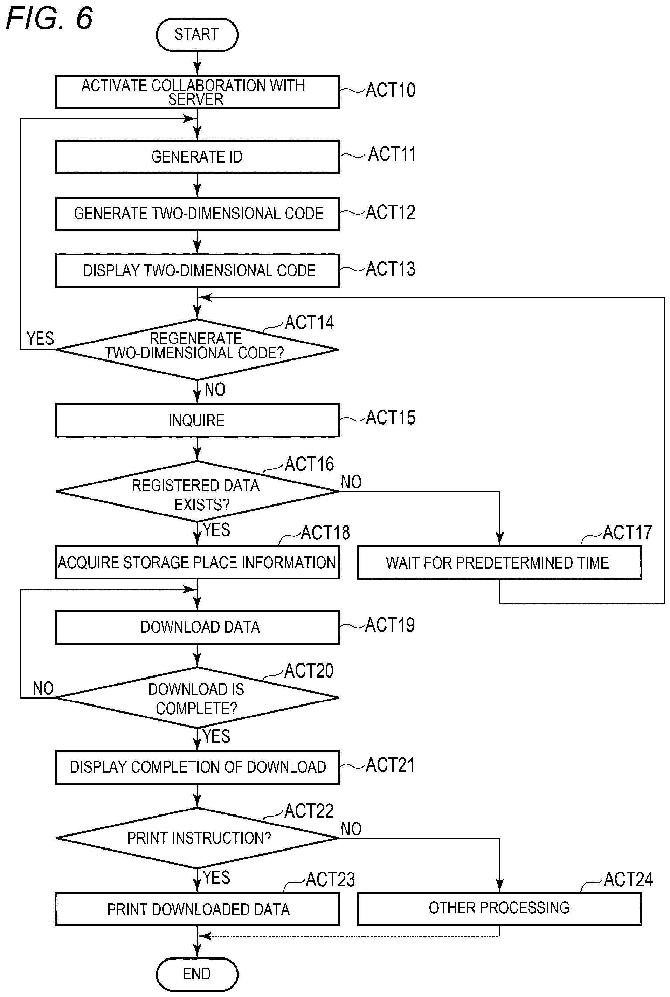

FIG. 6 is a flowchart for explaining an example of the operations of the digital multi-functional peripheral 2 as the image forming device in the document management system 1 according to the embodiment.
In the digital multi-functional peripheral 2, an application program to collaborate with the management server 3 (hereinafter also referred to as a collaboration app) is installed in a memory such as the data memory 34. The processor 31 of the system control unit 21 in the digital multi-functional peripheral 2 activates the collaboration app in response to an operation instruction or the like detected on the touch panel (operation device) 43 (ACT 10). Upon activating the collaboration app, the processor 31 executes the processing of generating and displaying a two-dimensional barcode representing an id.

Upon activating the collaboration app, the processor 31 of the digital multi-functional peripheral 2 first generates an id as identification information that univocally defines information (ACT 11). For example, the processor 31 generates a random id in a predetermined format. As a specific example, the processor 31 generates an id based on randomly selected numbers and letters as shown in FIG. 5.

Upon generating the id, the processor 31 of the digital multi-functional peripheral 2 generates a two-dimensional barcode as an image representing the generated id (ACT 12). For example, the processor 31 encodes the id, based on a predetermined algorithm, and thus generates a two-dimensional barcode. Upon generating the two-dimensional barcode representing the id, the processor 31 displays the generated two-dimensional barcode on the display device 42 of the operation panel 22 (ACT 13).

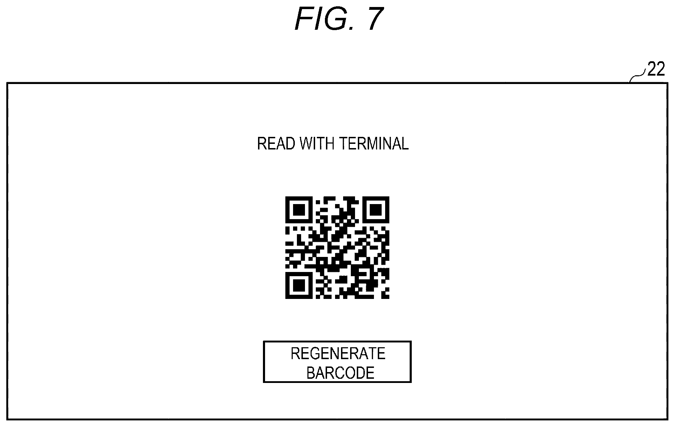

FIG. 7 shows an example of display in which the two-dimensional barcode is displayed on the display device 42 in the digital multi-functional peripheral 2.
As shown in FIG. 7, the processor 31 displays the two-dimensional barcode and also causes the display device 42 to display a guidance such as "Read with terminal". In the example of display shown in FIG. 7, the processor 31 causes the display device 42 to display a barcode generation button that gives an instruction to regenerate a two-dimensional barcode. The barcode generation button is a button that gives an instruction to regenerate an id and can cause the display device 42 to display a two-dimensional barcode representing the regenerated id.

That is, in the state where the two-dimensional barcode is displayed, the processor 31 of the digital multi-functional peripheral 2 accepts an instruction to regenerate the displayed two-dimensional barcode (ACT 14). If an instruction to regenerate the two-dimensional barcode is given (YES in ACT 14), the processor 31 regenerates the id and redisplays the two-dimensional barcode representing the regenerated id. For example, if it is detected via the touch panel (operation device) 43 that the barcode generation button as shown in FIG. 7 is designated, the processor 31 executes the processing of ACTS 11 to 13 again. Thus, the two-dimensional barcode displayed on the display device 42 is updated to the two-dimensional barcode representing the id regenerated in response to the instruction from the user.

If an instruction to regenerate the currently displayed two-dimensional barcode is not given (NO in ACT 14), the processor 31 of the digital multi-functional peripheral 2 inquires about the document corresponding to the currently displayed id, from the management server 3 (ACT 15). The processor 31 communicates with the management server 3 via the communication interface 35 and inquires about whether the document corresponding to the id represented by the currently displayed two-dimensional barcode is already registered, from the management server 3. The processor 31 determines whether information about the document linked to the id represented by the currently displayed two-dimensional barcode is registered, based on a response from the management server 3 to the inquiry (ACT 16).

If the information representing the document linked to the id is not acquired as the response to the inquiry (NO in ACT 16), the processor 31 of the digital multi-functional peripheral 2 waits for a predetermined time (ACT 17) and returns to ACT 15. That is, the processor 31 performs polling, using the id represented by the currently displayed two-dimensional barcode as a query parameter in a predetermined cycle, and thus repeatedly executes the inquiry to the management server 3.

If the document linked to the id is registered in the management server 3 (YES in ACT 16), the processor 31 of the digital multi-functional peripheral 2 acquires the storage place information of the document linked to the id from the management server 3 (ACT 18). For example, the processor 31 acquires a URL as the storage place information indicating the storage place of the document corresponding to the id.

Upon acquiring the storage place information of the document, the processor 31 of the digital multi-functional peripheral 2 accesses the storage place indicated by the acquired storage place information via the communication interface 35. Upon accessing the storage place of the document via the communication interface 35, the processor 31 downloads (DL) the document from the storage place (ACT 19).

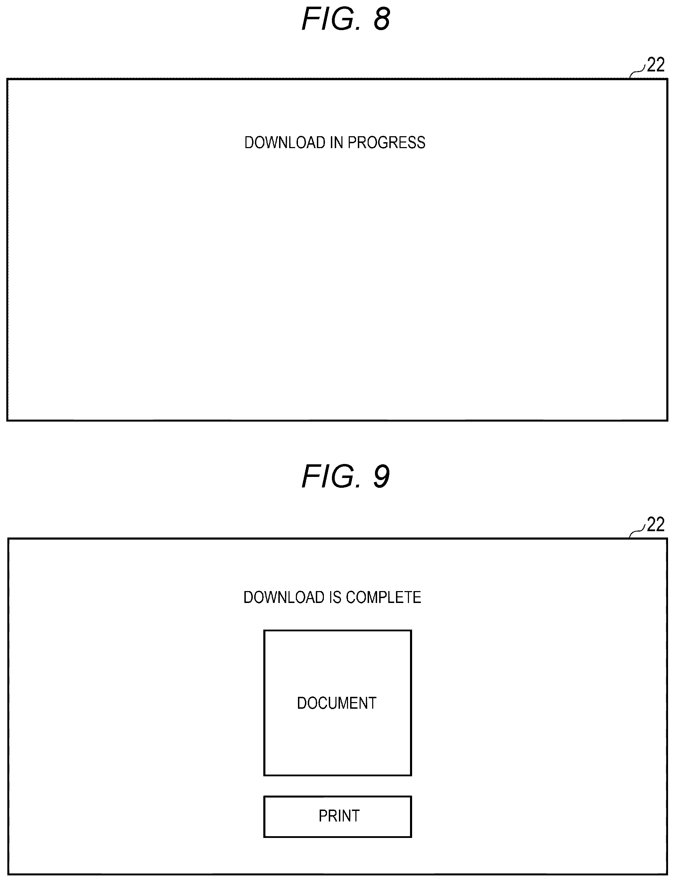

FIG. 8 shows an example of display of a guide screen displayed on the display device 42 while the digital multi-functional peripheral is downloading the document.
Upon accessing the storage place of the document, the processor 31 of the digital multi-functional peripheral 2 displays a guide screen showing that the download is in progress as shown in FIG. 8, on the display device 42. The processor 31 executes the download of the document while the guide screen as shown in FIG. 8 is displayed.

On completion of the download of the document (YES in ACT 20), the processor 31 of the digital multi-functional peripheral 2 displays a guide screen showing the completion of the download of the document on the display device 42 (ACT 21). While the completion of the download of the document is being displayed, the processor 31 accepts an instruction to execute processing such as printing of the acquired document.

FIG. 9 shows an example of display of the guide screen displayed on the display device 42 if the download of the document by the digital multi-functional peripheral 2 is complete.
On completion of the download of the document, the processor 31 of the digital multi-functional peripheral 2 displays a guide screen showing the completion of the download as shown in FIG. 9, on the display device 42. In the example of display shown in FIG. 9, the display device 42 displays a guidance showing the completion of the download, a preview (thumbnail) image of the downloaded document, and a print button.

In the example of display shown in FIG. 9, the preview image is an image showing the content of the downloaded document. The processor 31 causes the display device 42 to display the preview image showing the content of the document generated from the downloaded document. Also, the print button is a button that gives an instruction to print the downloaded document. If the designation of the print button is detected via the touch panel (operation device) 43, the processor 31 executes print processing of the downloaded document.

After completing the download of the document, the processor 31 of the digital multi-functional peripheral 2 accepts an instruction to execute processing of the document. If the processor 31 accepts a print instruction for the downloaded document (YES in ACT 22), the processor 31 executes the print processing of the document using the printer 23 (ACT 23). For example, if the print button is designated in the guide screen showing the completion of the download as shown in FIG. 9, the processor 31 executes the printing of the downloaded document.

Meanwhile, if the processor 31 accepts an instruction to execute other processing than the printing of the document (NO in ACT 22), the processor 31 executes processing of the document according to the content of the instruction (ACT 24). For example, if the processor 31 is instructed to perform facsimile transmission of the document, the processor 31 executes the processing of facsimile transmission of the acquired document to a designated destination via the facsimile interface 37.

By the processing as described above, the digital multi-functional peripheral as the image forming device displays a two-dimensional barcode as an image showing an id that is any identification information, on the display device. While the two-dimensional barcode representing the id is displayed on the display device, the digital multi-functional peripheral inquires about the storage place information of the document linked to the currently displayed id, from the management server. Upon acquiring the storage place information of the document linked to the currently displayed id from the management server, the digital multi-functional peripheral acquires the document from the storage place indicated by the acquired storage place information. Thus, the digital multi-functional peripheral can acquire the document linked to the currently displayed id and can execute processing such as printing of the document linked to the id.

Operations of the user terminal 4 in the document management system 1 according to the embodiment will now be described.

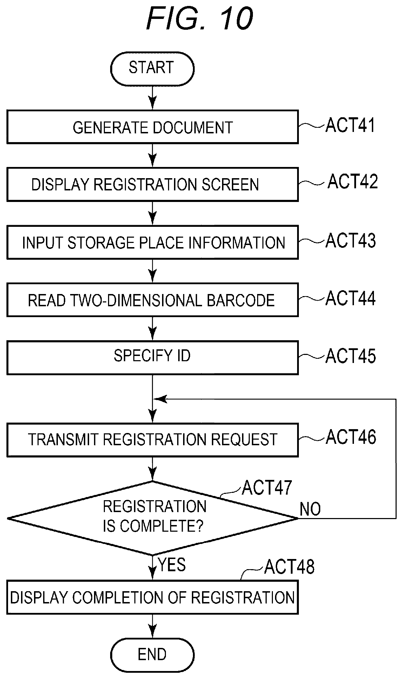

FIG. 10 is a flowchart for explaining an example of the operations of the user terminal 4 in the document management system 1 according to the embodiment.
In the user terminal 4, an application to generate a document and an application to register a document are installed in a memory such as the data memory 64. It is now assumed that an application to provide a document generated on the web server 5 to the digital multi-functional peripheral 2 via the management server 3 (hereinafter referred to as a web app) is installed in the user terminal 4.

Upon activating the web app, the processor 61 of the user terminal 4 accesses the web server 5 providing a service to generate a document. The processor 61 of the user terminal 4 generates a document in response to an operation by the user via the web server 5 (ACT 41). If the processor 61 generates a document via the web server 5 with the web app, the processor 61 acquires information (for example, a URL) representing the storage place of the generated document.

If the user supplies the document generated via the web server 5 to the digital multi-functional peripheral 2, the user operates the operation device 69 of the user terminal 4 to give an instruction to register this document. The processor 61 of the user terminal 4 displays, on the display device 68, a registration instruction screen to register the document in response to the operation by the user (ACT 42). Upon displaying the registration instruction screen, the processor 61 accepts an input of the storage place information of the document (ACT 43) and accepts the start of the reading of the two-dimensional barcode displayed by the digital multi-functional peripheral 2.

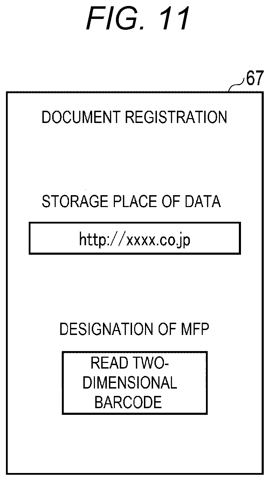

FIG. 11 shows an example of display of the registration instruction screen for the document, displayed on the display device 68 of the user terminal 4.
In the example of display shown in FIG. 11, the display device 68 displays an input field for the storage place information of the document (data), and a two-dimensional barcode reading button. In the example of display shown in FIG. 11, the storage place information representing the storage place of the document is inputted in the input field. The user inputs the storage place information of the document to be registered, to the input field, using the operation device 69 of the user terminal 4.

The two-dimensional barcode reading button is designated in the case of reading the two-dimensional barcode displayed on the display device 42 of the operation panel 22 of the digital multi-functional peripheral 2. The user designates the two-dimensional barcode reading button and picks up, with the camera 66, an image of the two-dimensional barcode displayed on the display device 42 of the digital multi-functional peripheral 2.

If an instruction to read the two-dimensional barcode is given by the two-dimensional barcode reading button or the like, the processor 61 of the user terminal 4 executes reading processing of the two-dimensional barcode (ACT 44). Upon starting the reading processing of the two-dimensional barcode, the processor 61 activates the camera 66. The processor 61 executes processing of acquiring an image captured by the camera 66 and extracting the two-dimensional barcode from the image captured by the camera 66. Upon extracting the two-dimensional barcode from the image captured by the camera 66, the processor 61 decodes the extracted two-dimensional barcode. The processor 61 specifies an id, based on the result of decoding the two-dimensional barcode extracted from the image picked up by the camera 66 (ACT 45).

Upon acquiring the id currently displayed by the digital multi-functional peripheral 2, the processor 61 of the user terminal 4 transmits a registration request for the document corresponding to the acquired id, to the management server 3 (ACT 46). For example, the processor 61 transmits the storage place information of the document linked to the acquired id, along with a registration request, to the management server 3 via the communication interface 65. If the processor 61 transmits a registration request to the management server 3, the processor 61 displays, on the display device 68, a guidance indicating that the registration is in progress.

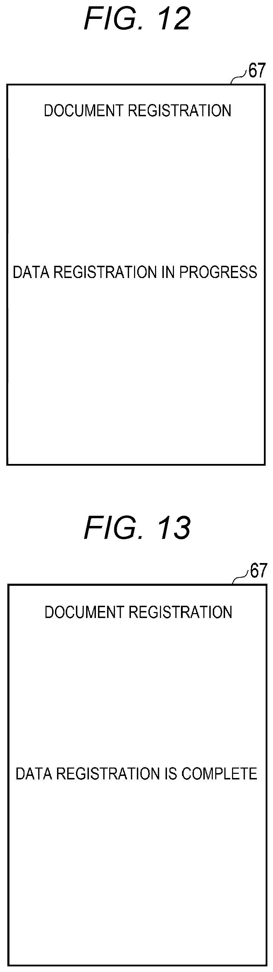

FIG. 12 shows an example of display of the guide screen showing that the registration is in progress, displayed on the display device 68 of the user terminal 4. If the processor 61 of the user terminal 4 acquires the id displayed by the digital multi-functional peripheral 2, the processor 61 displays a guide screen as shown in FIG. 12 on the display device 68. The processor 61 displays the guide screen as shown in FIG. 12 and also transmits a registration request including the id and the storage place information of the document, to the management server 3. In the example of display shown in FIG. 12, the display device 68 displays a guidance indicating that the transmission of the registration request including the id and the storage place information of the document is in progress.

After transmitting the registration request to the management server 3, the processor 61 of the user terminal 4 waits for a registration completion notification from the management server 3 (ACT 47). If the registration completion notification is not given from the management server 3 (NO in ACT 47), the processor 61 displays a guidance indicating that the registration is in progress, on the display device 68. If the processor 61 receives the registration completion notification from the management server 3 (YES in ACT 47), the processor 61 displays a guidance indicating the completion of the registration on the display device 68 (ACT 48).

FIG. 13 shows an example of display of the guide screen indicating the completion of the registration, displayed on the display device 68 of the user terminal 4.
If the processor 61 of the user terminal 4 receives the registration completion notification from the management server 3, the processor 61 displays a guide screen as shown in FIG. 13 on the display device 68 and reports the completion of the registration to the user. In the example of display shown in FIG. 13, the display device 68 displays a guidance indicating that the storage place information of the document is registered, establishing the correspondence with the ID displayed by the digital multi-functional peripheral 2. As the guide screen as shown in FIG. 13 is displayed on the display device 68, the user can recognize that the registration of the storage place information of the document linked to the id is complete.

With the processing as described above, the user terminal captures, with the camera, a two-dimensional barcode representing an id displayed by the digital multi-functional peripheral, and thus acquires the id. The user terminal causes the management server to register the storage place information of a document designated by the user, establishing the correspondence with the id displayed by the digital multi-functional peripheral. Thus, the user terminal can register, in the management server, the storage place information of the document, establishing the correspondence with the id displayed by the digital multi-functional peripheral, without transmitting the document or the information representing the document directly to the digital multi-functional peripheral.

Operations of the management server 3 in the document management system 1 according to the embodiment will now be described.

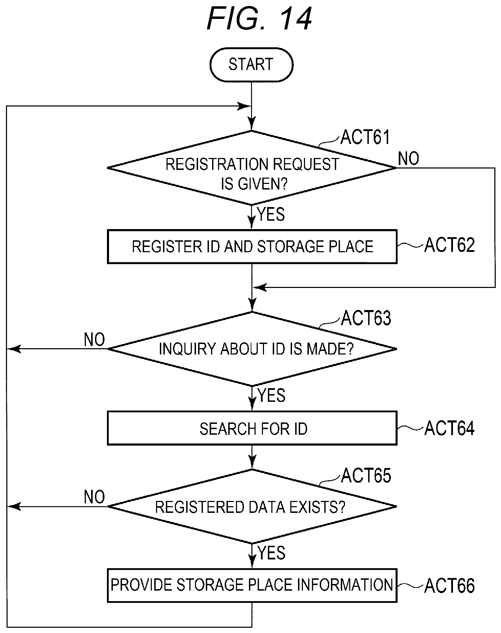

FIG. 14 is a flowchart explaining an example of the operations of the management server 3 in the document management system 1 according to the embodiment.
The management server 3 executes processing of registering the storage place information of a document, establishing a corresponding with an id, and processing of providing the storage place information of the document corresponding to the id to the digital multi-functional peripheral.

That is, the processor 51 of the management server 3 accepts a registration request for the storage place information of the document corresponding to the id from the user terminal 4 (ACT 61). Upon receiving the registration request from the user terminal 4 (YES in ACT 61), the processor 51 registers (saves) the id and the storage place information of the document received from the user terminal 4, in the database 56, establishing the correspondence between the id and the storage place information (ACT 62).

Also, the processor 51 of the management server 3 accepts an inquiry about the presence or absence of the storage place information of the document corresponding to the currently displayed id, from the digital multi-functional peripheral 2 via the communication interface 54 (ACT 63). For example, the processor 51 of the management server 3 receives an inquiry including the currently displayed id transmitted in a predetermined cycle from the digital multi-functional peripheral 2 via the communication interface 54. Every time the processor 51 receives an inquiry with a designated id from the digital multi-functional peripheral 2 (YES in ACT 63), the processor 51 searches for whether the id received from the digital multi-functional peripheral 2 is registered in the database 56 (ACT 64).

If the id with which the inquiry is received from the digital multi-functional peripheral 2 is found in the database 56 (YES in ACT 65), the processor 51 of the management server 3 acquires the storage place information of the document corresponding to this id from the database 56. The processor 51 transmits the storage place information of the document linked to the id, acquired from the database 56, to the digital multi-functional peripheral 2 via the communication interface 54 (ACT 66).

As described above, the management server in the document management system registers a document, establishing a correspondence with an id displayed by the digital multi-functional peripheral, in response to a registration request from the user terminal. Also, the management server transmits the storage place information of the document corresponding to the currently displayed id about which an inquiry is received from the digital multi-functional peripheral, to this digital multi-functional peripheral. Thus, the digital multi-functional peripheral can acquire the storage place information of the document linked to the currently displayed id, from the management server, and can acquire the document located according to the storage place information.

The document management system as described above enables the user to intuitively designate a digital multi-functional peripheral to execute processing such as printing of a document. Also, in the document management system, a document to be processed or information to acquire the document need not be directly transmitted from the user terminal to the digital multi-functional peripheral. Therefore, the digital multi-functional peripheral need not be provided with a configuration to acquire the information directly from the user terminal. Also, since a document generated via a web service or the like need not be downloaded to the user terminal in order to perform processing such as printing at the digital multi-functional peripheral, the convenience for the user is improved.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope and scope of the disclosure.

## Claims

1. An image forming device comprising:
a display device configured to display an image;
a communication interface configured to communicate via a network to which an external device communicated with a management server connects; and
a processor configured to:
cause the display device to display an image showing identification information ;
inquire about storage place information of a document linked to the identification information, from the management server; and
download the document stored in a storage place indicated by the storage place information in response to acquiring the storage place information of the document linked to the identification information.

2. The image forming device according to claim 1, wherein the image is a two-dimensional barcode, the processor to cause the display device to display the two-dimensional barcode representing the identification information.

3. The image forming device according to claim 1 or 2, further comprising:
a printer configured to print the image, wherein
the processor causes the printer to print the image based on the downloaded document, on a medium.

4. The image forming device according to any one of claims 1 to 3, wherein the processor transmits an inquiry about the document linked to the identification information to the management server in a predetermined cycle while the image showing the identification information is displayed on the display device, and the processor accepts a response from the management server.

5. A document management system comprising an image forming device and a management server,
the image forming device comprising:
a display device configured to display an image;
a first communication interface configured to connect to a network to which an external device communicated with the management server is connected; and
a first processor configured to:
cause the display device to display an image showing identification information ;
inquire about storage place information of a document linked to the identification information, from the management server; and
download the document stored in a storage place indicated by the storage place information if the storage place information of the document linked to the identification information is acquired,
the management server comprising:
a second communication interface configured to communicate via the network;
a memory configured to link and store the identification information and the storage place information of the document acquired from a portable terminal communicating via the second communication interface; and
a second processor configured to transmit, to the image forming device, the storage place information of the document linked to the identification information saved in the memory, in response to receiving an inquiry from the image forming device designating the identification information.

6. The document management system according to claim 5, wherein the image is a two-dimensional barcode, the first processor being configured to cause the display device to display the two-dimensional barcode representing the identification information.

7. The document management system according to claim 5 or 6, the image forming apparatus further comprising:
a printer configured to print the image, wherein
the first processor is configured to cause the printer to print, on a medium, the image based on the downloaded document.

8. The document management system according to claim 5, wherein
the first processor is configured to
transmit the inquiry about the document linked to the identification information to the management server in a predetermined cycle while the image showing the identification information is displayed on the display device, and
accept a response from the management server.

9. The document management system according to any one of claims 5 to 8, further comprising a portable terminal including a third communication interface, the portable terminal communicating with the management server via the second communication interface.

10. The document management system according to claims 9, the portable terminal comprising a camera and a third processor, wherein the third processor is configured to process the image showing identification information picked up by the camera.

11. A non-transitory computer-readable medium storing instructions that, when executed by a processor, cause the processor to perform operations comprising:
causing a display device to display an image showing identification information ;
inquiring about storage place information of a document linked to the identification information, from a management server; and
downloading the document stored in a storage place indicated by the storage place information in response to acquiring the storage place information of the document linked to the identification information.

12. The non-transitory computer-readable medium according to claim 11, wherein the image is a two-dimensional barcode, the processor to perform operations further comprising causing the display device to display the two-dimensional barcode representing the identification information.

13. The non-transitory computer-readable medium according to claim 11 or 12, the processor to perform operations further comprising:
causing a printer to print the image based on the downloaded document, on a medium.

14. The non-transitory computer-readable medium according to any one of claims 9 to 13, the processor to perform operations further comprising:
transmitting an inquiry about the document linked to the identification information to the management server in a predetermined cycle while the image showing the identification information is displayed on the display device, and
accepting a response from the management server.
